# EUROPÄISCHE PATENTANMELDUNG

(11) **EP 4 120 624 A1**
(43) Veröffentlichungstag der Anmeldung: **18.01.2023**
(21) Anmeldenummer: 21185262.9
(22) Anmeldetag: 13.07.2021
(51) Int. Cl.: H04L 9/40

(54) **VERFAHREN UND AUTOMATISIERUNGSSYSTEM ZUR EINBINDUNG EINES AUTOMATISIERUNGSGERÄTS**

(71) Anmelder: Siemens Aktiengesellschaft, 80333 München (DE)
(72) Erfinder: Bode, Sebastian, 59229 Ahlen (DE)

(57) **Zusammenfassung**

Automatisierungsgeräte müssen üblicherweise konfiguriert werden, bevor sie im Automatisierungssystem bzw. im Zusammenspiel mit anderen Automatisierungsgeräten genutzt werden können. Eine Anpassung des Automatisierungsgeräts, z.B. durch Konfiguration der auf dem Automatisierungsgerät gespeicherten Konfigurationsdaten, zur Einbindung in das Automatisierungssystem wird in der Fachwelt auch als Onboarding bezeichnet. Gemäß der vorliegenden Erfindung werden Verfahren zum Einbinden eines Automatisierungsgeräts in ein Automatisierungssystem bereitgestellt, mit denen auf den Automatisierungsgeräten vorinstallierte Berechtigungsnachweise bei gleichbleibender Sicherheit erlässlich sind. Das Verfahren ist insbesondere vorteilhaft für Hersteller von Automatisierungsgeräten, welche als Universalgeräte vertrieben werden und erst später, kundenseitig in ein Automatisierungssystem eingebunden werden sollen.

## Beschreibung

Die Erfindung betrifft ein Verfahren und ein Automatisierungssystem zur Einbindung eines Automatisierungsgeräts in das Automatisierungssystem.

Mit einer zunehmenden Verbreitung verteilter, sogenannter cloudbasierter Architekturen in industriellen Fertigungsumgebungen halten auch in industriellen Automatisierungsgeräten - also in intelligenten Feldgeräten, Sensoren, Aktoren und Steuerungseinheiten der Automatisierungstechnik sowie in Automatisierungsanlagen - Technologien Einzug, welche bislang einer servergestützten Datenverarbeitung vorbehalten waren. Auch ist eine Verlagerung von Rechenressourcen zu beobachten, durch welche ein stärkeres Gewicht auf Rechenoperationen »im Feld«, also in einer industriellen Feldebene, gelegt wird. In der Fachwelt wird diese Verlagerung auch als Edge Computing bezeichnet.

Im Zuge dieser Verlagerung von Rechenressourcen müssen zunehmend Aufgaben auf einer Ebene der Automatisierungsgeräte bewältigt werden, welche bisher höheren Leitebenen vorbehalten waren. Aufgrund einer steigenden Zahl solcher vernetzten Automatisierungsgeräts und der besonderen Bedingungen in der industriellen Feldebene sind die aus der Leitebene bekannten Lösungsansätze nicht unbedingt in die Feldebene übertragbar.

Neu hinzutretende, reparierte, rekonfigurierte oder bezüglich ihrer Software aufgefrischte Automatisierungsgeräte müssen üblicherweise konfiguriert werden, bevor sie im Automatisierungssystem bzw. im Zusammenspiel mit anderen Automatisierungsgeräten genutzt werden können. Eine Anpassung des Automatisierungsgeräts, z.B. durch Konfiguration der auf dem Automatisierungsgerät gespeicherten Konfigurationsdaten, zur Einbindung in das Automatisierungssystem wird in der Fachwelt auch als Onboarding bezeichnet.

In gegenwärtigen Automatisierungssystemen ist zur Anpassung eines Automatisierungsgeräts zum Betrieb in einem spezifischen Automatisierungssystem noch eine Parametrisierung des Automatisierungsgeräts vor seinem eigentlichen Einsatz bekannt. Diese Parametrisierung kann allgemeine Konfigurationsdaten umfassen, beispielsweise eine dem Automatisierungsgerät innerhalb des Automatisierungssystems fest zugewiesene Netzwerkadresse oder auch einsatzspezifische Konfigurationsdaten, beispielsweise Schaltzeiten des Automatisierungsgerätes.

Während in herkömmlichen Automatisierungssystemen eine solche Parametrisierung ungeschützt bereitgestellt wird, wird mittlerweile ein Schutz vor Manipulationen bis herunter zur Feldebene als unerlässlich angesehen. Dabei soll gewährleistet werden, dass Dritte keine Möglichkeit zur Manipulation von Konfigurationsdaten auf dem Automatisierungsgerät haben, selbst wenn sie Zugang zum Automatisierungssystem erlangen. Heutige Automatisierungsgeräte sind im Auslieferungszustand daher üblicherweise mit Berechtigungsnachweisen bzw. Credentials ausgestattet.

Als Berechtigungsnachweise werden beispielsweise von Pre-Shared Keys bzw. PSK oder Pre-Shared Secrets verwendet, welche auf dem Automatisierungsgerät gespeichert werden. Auch Identifizierungsmerkmale des Automatisierungsgerät, z.B. eine Seriennummer, werden oftmals als Berechtigungsnachweis oder auch als Teil eines Berechtigungsnachweises zum Einbinden des Automatisierungsgerät in das Automatisierungssystem verwendet.

Weiterhin sind stärkere asymmetrische kryptographische Berechtigungsnachweise bekannt, bei der ein kryptographische Verwahrungsmodul oder auch Trusted Platform Module, kurz TPM, also ein im Automatisierungsgerät meist isoliert angelegtes Hardwaremodul zur Berechnung und/oder Verwahrung kryptographischer Daten zum Einsatz kommt. In einem solchen Verwahrungsmodul kann im Auslieferungszustand des Automatisierungsgeräts schon ein kryptographischer Schlüssel oder ein kryptographisches Schlüsselpaar hinterlegt sein, wobei private kryptographische Schlüssel innerhalb des Automatisierungsgeräts verwahrt bleiben und dieses nicht verlassen.

Die vorliegende Erfindung ist vor die Aufgabe gestellt, Mittel zum Einbinden eines Automatisierungsgeräts in ein Automatisierungssystem bereitzustellen, mit denen vorinstallierte Berechtigungsnachweise bei gleichbleibender Sicherheit erlässlich sind.

Die Aufgabe wird durch ein computerimplementiertes Verfahren mit den Merkmalen des Patentanspruchs 1 gelöst. Die Aufgabe wird weiterhin durch ein Automatisierungssystem mit den mit den Merkmalen eines nebengeordneten Patentanspruchs gelöst.

Die Aufgabe wird weiterhin durch ein Authentisierungsgerät mit den mit den Merkmalen eines nebengeordneten Patentanspruchs gelöst.

Die Aufgabe wird weiterhin durch ein Computerprogrammprodukt zur Abarbeitung des erfindungsgemäßen Verfahrens gelöst. Das Computerprogramm wird in einem Prozessor oder Controller abgearbeitet, welcher mit der Abarbeitung das Verfahren ausführt.

In einem vorzugweise computerimplementierten Verfahren zum Einbinden eines Automatisierungsgeräts in ein Automatisierungssystem unter Verwendung eines mit dem Automatisierungsgerät verbindbaren Authentisierungsgeräts, sind dabei folgende Schritte vorgesehen:
- In einem ersten Verfahrensschritt erfolgt eine Ausbildung einer Schnittstelle zwischen dem Automatisierungsgerät und dem Authentisierungsgerät. Die Schnittstelle kann dabei als ein logische Kommunikationskanal bzw. »Session« ausgebildet sein. In einer bevorzugten Variante ist diese Schnittstelle eine direkte Schnittstelle, so dass aus Sicherheitsgründen eine direkte Verbindung zwischen dem Automatisierungsgerät und dem Authentisierungsgerät erforderlich gemacht werden kann. Nach der Ausbildung dieser Schnittstelle zwischen dem Automatisierungsgerät und dem Authentisierungsgerät erfolgt eine Generierung eines dem Automatisierungsgerät zugeordneten Zugriffsberechtigungsnachweises. Die Generierung des Zugriffsberechtigungsnachweises erfolgt beispielsweise in Zusammenarbeit des Automatisierungsgeräts und des über die Schnittstelle mit dem Automatisierungsgerät verbundenen Authentisierungsgeräts. Alternativ kann eine Generierung des Zugriffsberechtigungsnachweises auch weitgehend alleine vom Automatisierungsgerät erfolgen, wobei z.B. vom Authentisierungsgerät über die Schnittstelle übermittelte bzw. ausgetauschte Daten bei der Generierung verwendet werden. Entsprechend kann eine Generierung des Zugriffsberechtigungsnachweises auch weitgehend alleine vom Authentisierungsgerät erfolgen, wobei z.B. vom Automatisierungsgerät über die Schnittstelle übermittelte bzw. ausgetauschte Daten bei der Generierung durch das Authentisierungsgerät verwendet werden.
- In einem zweiten Verfahrensschritt erfolgt ein Empfang und Authentisierung des Zugriffsberechtigungsnachweises an einem Automatisierungsserver des Automatisierungssystems und Zuweisung einer Zugriffsberechtigung an das Automatisierungsgerät. Der vom Automatisierungsserver empfangene Berechtigungsnachweis kann entweder vom Automatisierungsgerät oder vom Authentisierungsgerät gesendet werden, siehe hierzu die weiter unten erläuterten Ausführungsbeispiele. Entsprechend kann der vom Automatisierungsserver empfangene Berechtigungsnachweis vom Automatisierungsgerät oder vom Authentisierungsgerät indirekt gesendet werden, d.h. über ein oder mehrere Instanzen weitergereicht werden, bevor dieser von Seiten des Automatisierungsservers empfangen wird. Nach einer erfolgreichen Authentisierung des Zugriffsberechtigungsnachweises durch den Automatisierungsserver und nach der Zuweisung der Zugriffsberechtigung an das Automatisierungsgerät ist das Automatisierungsgerät zugriffsberechtigt am Automatisierungsserver oder am Automatisierungssystem. Die Zugriffsberechtigung ist jedoch nicht allumfassend, sondern bezieht sich nur auf den Empfang des Identitätsnachweises im folgenden Verfahrensschritt. Mit anderen Worten ist die Zugriffsberechtigung ein Zwischenstadium, in der noch keine Einbindung des Automatisierungsgeräts im Automatisierungssystem erfolgt ist.
- In einem dritten Verfahrensschritt erfolgt ein Empfang und Authentisierung eines Identitätsnachweises des zugriffsberechtigten Automatisierungsgeräts - also des Automatisierungsgeräts, dem eine Zugriffsberechtigung zugewiesen wurde - am Automatisierungsserver und Einbinden des bezüglich seiner Identität authentisierten Automatisierungsgeräts in das Automatisierungssystem. Mit der Authentisierung der Identität des Automatisierungsgeräts ist die Einbindung des Automatisierungsgeräts im Automatisierungssystem berechtigungsseitig abgeschlossen. Selbstverständlich kann die Einbindung des Automatisierungsgeräts auch eine Parametrisierung, beispielsweise eine Übermittlung und Einstellung von Konfigurationsdaten am Automatisierungsgerät umfassen. Diese Parametrisierung wird mit den berechtigungsseitigen Mitteln der Erfindung gewährleistet, ist aber weder eine notwendige Voraussetzung noch eine notwendige Begleitung der erfindungsgemäßen Verfahrensschritte bzw. erfindungsgemäßen Mittel.

Die Erfindung sieht vor, eine Schnittstelle zwischen dem zu verbindenden Automatisierungsgerät und einem erstmals in dieser Form vorgeschlagenen Authentisierungsgerät bestehen muss, um durch über diese Schnittstelle ausgetauschte Daten zunächst eine Zuordnung des Automatisierungsgerät zum Authentisierungsgerät zu ermöglichen. Eine Präsenz des Authentisierungsgeräts wirkt also bereits als erster Berechtigungsnachweis in Form einer Mehrfaktor-Authentifizierung.

Das Authentisierungsgerät kann bei Bedarf durch einen hierzu autorisierten Servicetechniker ein- und ausgesteckt oder verbunden und getrennt werden, um diesen ersten Faktor der Mehrfaktorenauthentifizierung zu aktivieren oder zu deaktivieren. Je nach Sicherheitskritikalität kann gefordert sein, dass die Schnittstelle bestimmte strengere Anforderungen - beispielsweise als unmittelbare Direktverbindung vorliegen muss, um zusätzlich eine örtliche Präsenz des Servicetechnikers im unmittelbaren Umfeld der einzubindenden Automatisierungsgeräts zu fordern - erfüllen muss.

Nach Verbindung der Geräte wird ein erstes Authentisierungsverfahren durchgeführt. Ein Automatisierungsserver des Automatisierungssystems erhält in diesem Schritt einen durch das Authentisierungsgerät belegten Nachweis, dass ein bestimmtes Automatisierungsgerät mit dem Authentisierungsgerät verbunden wurde. Der Automatisierungsserver kann nun dem Automatisierungsgerät basierend darauf Eigenschaften zuweisen, beispielsweise eine Zugriffsberechtigung einrichten oder auch schon in diesem Stadium - also noch vor der endgültigen Einbindung des Automatisierungsgeräts - eine Parametrisierung des Automatisierungsgerät veranlassen.

Nach Vorliegen der Zugriffsberechtigung wird ein zweites Authentisierungsverfahren durchgeführt. Dieses zweite Authentisierungsverfahren authentisiert nun tatsächlich einen Identitätsnachweis des zugriffsberechtigten Automatisierungsgeräts, unter Verwendung eines mit dem Automatisierungsgerät verbundenen Identitätsnachweises. »Verbunden« kann auch bedeuten, dass der Identitätsnachweis im Automatisierungsgerät vorliegt, der Identitätsnachweis das Automatisierungsgerät aber nicht notwendigerweise verlässt, indem dieser beispielswiese an den Automatisierungsserver übergeben wird.

Der Identitätsnachweis kann beispielsweise durch ein Challenge-Response-Verfahren erbracht werden, bei der seitens des Automatisierungsservers eine Aufgabe bzw. Challenge gestellt wird, für die das Automatisierungsgerät eine richtige Antwort bzw. Response geben muss, etwa um zu belegen, dass des eine bestimmte Information - ein Shared Secret - kennt, ohne den Identitätsnachweis selbst herauszugeben bzw. zu übertragen. Der Identitätsnachweis ist in diesem breiten Sinn mit dem Automatisierungsgerät verbunden. Der Identitätsnachweis ist also insbesondere nicht - wie im ersten Authentisierungsverfahren möglich - mit dem Authentisierungsgerät verbunden. Mit der Authentisierung der Identität des Automatisierungsgeräts von Seiten des Automatisierungssystems ist die Einbindung des Automatisierungsgeräts im Automatisierungssystem berechtigungsseitig abgeschlossen.

Ein wichtiger Unterschied der Erfindung gegenüber bekannten - auch mehrstufigen - Authentisierungsverfahren ist der Umstand, dass aus dem Stand der Technik bekannten Lösungen stets eine Identität mit einem Nachweis - also einem Credential wie z.B. einem kryptografischen Schlüssel - verknüpfen.

Im Gegensatz zu diesen aus dem Stand der Technik bekannten Lösungen wird bei der erfindungsgemäß vorgeschlagenen Lösung zunächst eine Berechtigung - keine Identität - mit einem Nachweis - dem Zugriffsberechtigungsnachweis - verknüpft. Erst in einem folgenden zweiten Authentisierungsverfahren wird eine Identität mit einem Nachweis - dem Identitätsnachweis - verknüpft.

Das erfindungsgemäße Merkmal einer Vorsehung eines ersten Authentisierungsverfahrens zur Authentisierung einer Zugriffsberechtigungsnachweises, gefolgt von einem zweiten Authentisierungsverfahrens zur Authentisierung eines Identitätsnachweises hat mehrere Vorteile:
- Während im Stand der Technik bekannte Verfahren, bei denen kryptographische Schlüssel eingesetzt werden, welche mit einem Zugangsmedium - beispielsweise ein USB-Stick mit einem kryptographischen Verwahrungsmodul bzw. TPM - verbunden sind, ein Besitz des Zugangsmediums allein zur Gewähr einer Zugriffsberechtigung ausreicht, gestattet die erfindungsgemäße Zugriffsberechtigung demgegenüber für sich genommen noch keinen Zugang im Sinne einer Einbindung. Die erfindungsgemäße Zugriffsberechtigung erlaubt vielmehr nur einen Zugriff mit dem Ziel einer Verknüpfung einer Identität mit einer Berechtigung, mithin des erfindungsgemäßen Identitätsnachweises.
- Erfindungsgemäß wird sowohl bei der Durchführung des erfindungsgemäßen Verfahrens zum Einbinden des Automatisierungsgeräts in das Automatisierungssystem unter Verwendung des mit dem Automatisierungsgerät verbindbaren Authentisierungsgeräts als auch nach Abarbeitung dieses Verfahrens weiterhin zwischen den einzelnen Geräten unterschieden. Eine spätere Entscheidung über Berechtigungen erfolgt also primär anhand des Identitätsnachweises und nicht anhand der Zugriffsberechtigungsnachweises unter Mitwirkung des ehemals verbundenen Authentisierungsgeräts.
- Ein besonderer Vorteil der erfindungsgemäß getrennten Nachweise - Zugriffsberechtigungsnachweis und Identitätsnachweis - wird bei einer Betrachtung einer Bereitstellung bzw. »Deployment« einer Mehrzahl von Automatisierungsgeräten deutlich, welche über ein einzelnes Authentisierungsgerät eingebunden werden. Zwar hat der unter Mitwirkung des einzelnes Authentisierungsgeräts generierte jeweilige Zugriffsberechtigungsnachweis jedem einzelnen der Mehrzahl von Automatisierungsgeräten eine vergleichbare vorläufige Zugriffsberechtigung erteilt. Nach Einbindung der jeweiligen Automatisierungsgeräte hängen deren jeweilige Zugriffsrechte - also deren Rechte, Daten auf einem bestimmten Speicherbereichs des Automatisierungsservers abzulegen oder Daten von dort zu lesen - ausschließlich von den ihrer Identität zugewiesenen Rechte ab, die im Gegensatz zur vergleichbaren vorläufigen Zugriffsberechtigung durchaus von Automatisierungsgerät zu Automatisierungsgerät unterschiedlich sein wird.

Der erfindungsgemäße Zugriffsberechtigungsnachweis und/oder Identitätsnachweis kann beispielsweise unter Anwendung bekannter Public-Key-Infrastruktur bzw. PKI gestaltet sein oder eingesetzt werden, also beispielsweise unter Einsatz asymmetrischer oder symmetrischer kryptografischer Schlüssel sowie entsprechender Verfahren im Zusammenhang mit einer Signierung, Zertifikatverwendung, hierarchischen Vertrauensmodellen etc.

Weitere Ausgestaltungen der Erfindung sind Gegenstand der abhängigen Patentansprüche.

Gemäß einer Fortbildung der Erfindung ist vorgesehen, dass die Schnittstelle zwischen dem Automatisierungsgerät und dem Authentisierungsgerät durch eine unmittelbare optische oder galvanische Direktverbindung gebildet wird. Während diese Schnittstelle auch als ein logische Kommunikationskanal bzw. »Session« in einem Datennetzwerk, möglicherweise innerhalb des weltweiten Internets ausgebildet sein kann, ist in die Schnittstelle in dieser Fortbildung der Erfindung eine direkte Schnittstelle, so dass aus Sicherheitsgründen eine unmittelbare Direktverbindung zwischen dem Automatisierungsgerät und dem Authentisierungsgerät. Je nach Sicherheitskritikalität kann diese Maßnahme erforderlich sein, um strengere Anforderungen bezüglich einer örtlichen Präsenz eines autorisierten Servicetechnikers im unmittelbaren Umfeld der einzubindenden Automatisierungsgeräts zu erfüllen. Eine unmittelbare Verbindung wird beispielweise über ein optisches oder galvanisches Patchkabel gebildet. Zusätzlich kann vorgesehen, dass Schnittstelle mit vorbehaltenen, auch proprietären phasischen Buchsen bzw. Steckern gebildet wird. An einer direkten Verbindung sind möglicherweise auch passive Komponenten zur Herstellung der Verbindung z.B. Anschlussdosen, Patchpanels, etc. beteiligt. Eine mittelbare Verbindung ist demgegenüber dadurch gekennzeichnet, dass in der optischen oder galvanischen Verbindung zumindest eine aktive Einheit zwischengeschaltet ist, beispielsweise ein Switch, ein Router, ein Repeater, ein Signalverstärker bzw. Signal Shaper, eine signaloptische Komponente etc.

Gemäß einer weiteren möglichen Fortbildung der Erfindung ist vorgesehen, dass eine Prüfung auf eine unmittelbare Direktverbindung erfolgt, um eine mittelbare Verbindung auszuschließen. Eine Prüfung bzw. eine Verifizierung einer unmittelbaren Verbindung und/oder ein Ausschluss bzw. eine Falsifizierung einer mittelbaren Verbindung bedeutet insbesondere, dass auszuschließen ist, dass das Automatisierungsgerät mit dem verbundenen Authentisierungsgerät gemeinsam mit einem »transparenten« Netzknoten verbunden sind, also beispielsweise mit einem Netzwerk-Switch. Mögliche Angreifer könnten nämlich aktive transparente Einheiten in eine physische Verbindung zwischen dem Automatisierungsgerät und dem verbundenen Authentisierungsgerät zwischenschalten. Transparent bedeutet dabei, dass diese Einheiten von vorhandenen Überwachungsverfahren bzw. Intrusion Detection Verfahren nicht erkannt würden. Derlei transparente Einheiten sind über eine herkömmliche LAN-Verbindung inline verbunden, können jedoch von Überwachungssystemen in höheren Schichten nicht identifiziert oder erkannt werden, da ihre Wirkung in höheren Schichten mit der eines passiven Patchkabels verglichen werden kann.

Gemäß einer möglichen Fortbildung der Erfindung ist vorgesehen, dass der Zugriffsberechtigungsnachweis vom Automatisierungsgerät an den Automatisierungsserver gesendet wird. Dies kann auf zwei Weisen erfolgen:
- In einer ersten Ausgestaltungsvariante ist vorgesehen, dass der Zugriffsberechtigungsnachweis vom Automatisierungsgerät an den Automatisierungsserver gesendet wird, wobei das Authentisierungsgerät in dieser ersten Ausgestaltungsvariante ausschließlich mit dem Automatisierungsgerät kommuniziert.
- In einer zweiten Ausgestaltungsvariante ist vorgesehen, dass der Zugriffsberechtigungsnachweis vom Authentisierungsgerät an den Automatisierungsserver gesendet wird. Auch in dieser zweiten Ausgestaltungsvariante kann der Zugriffsberechtigungsnachweis vom Automatisierungsgerät entsprechend der hier erläuterten Fortbildung indirekt an den Automatisierungsserver gesendet werden, genauer gesagt also vom Automatisierungsgerät an das Authentisierungsgerät und von diesem an den Automatisierungsserver.

Gemäß einer möglichen Fortbildung der Erfindung ist vorgesehen, dass der Zugriffsberechtigungsnachweises vom Authentisierungsgerät an den Automatisierungsserver gesendet wird. In dieser Fortbildung ist also vorgesehen, dass der Zugriffsberechtigungsnachweis vom Authentisierungsgerät direkt an den Automatisierungsserver gesendet wird, wobei das Automatisierungsgerät ausschließlich mit dem Authentisierungsgerät kommuniziert.

Gemäß einer möglichen Fortbildung der Erfindung ist vorgesehen, dass die Generierung des Zugriffsberechtigungsnachweises in Zusammenwirkung des Automatisierungsgerät und des Authentisierungsgerät erfolgt. Eine solche Zusammenwirkung zwischen Automatisierungsgerät und Authentisierungsgerät ist abzugrenzen von einer reinen Anforderung eines Zertifikats oder einer mit einem privaten Signierungsschlüssel versehenen Signatur und hat den Vorteil, dass eine Übertragung sensibler Nachweise - beispielsweise privat zu bleibendem Schlüssel - sowie eine damit verbundene Kompromittierung gegenüber eventuellen Man-in-the-Middle-Angriffen in vorteilhafter Weise unterbleiben können. Eine Generierung des Zugriffsberechtigungsnachweises unter Durchführung eines Challenge-Response-Verfahrens ist ein mögliches Ausführungsbeispiel für eine solche Zusammenwirkung des Automatisierungsgerät und des Authentisierungsgerät zur Generierung des Zugriffsberechtigungsnachweises.

Gemäß einer Fortbildung der Erfindung ist vorgesehen, dass der Empfang des Identitätsnachweises durch einen zwischen dem Authentisierungsgerät und dem Automatisierungsserver ausgebildeten Kommunikationskanal erfolgt. Diese Fortbildung betrifft also einer der oben erläuterten Varianten, bei denen - dort allerdings für den Fall der Übertragung des Zugriffsberechtigungsnachweises erläutert - ein indirekter oder direkter Datenaustausch über einen zwischen dem Authentisierungsgerät und dem Automatisierungsserver ausgebildeten Kommunikationskanal stattfindet. Die hier erläuterte Ausgestaltung betrifft den Empfang des Identitätsnachweises, welcher über einen zwischen dem Authentisierungsgerät und dem Automatisierungsserver ausgebildeten Kommunikationskanal übertragen wird. Dabei kann der Kommunikationskanal zur Übertragung des Zugriffsberechtigungsnachweises aufrechterhalten bleiben, bis eine Übertragung des Identitätsnachweises zwischen dem Authentisierungsgerät und dem Automatisierungsserver erfolgt. Mit anderen Worten kann der Kommunikationskanal der gleich sein. Dieser Kommunikationskanal kann beispielsweise über ein oder mehrere Netzwerke oder Netzwerksegmente erfolgen, so dass sich Maßnahmen zum Schutz vor Kompromittierung ausgetauschter Daten zur Sicherung dieses Kommunikationskanals über eventuelle nicht einer eigenen Kontrolle unterliegenden Netzwerke oder Netzwerksegmente als vorteilhaft erweisen. Eine solche Sicherung kann in vorteilhafter Weise darin bestehen, den Kommunikationskanal zu verschlüsseln. Diese Maßnahme wird in der Fachwelt üblich - wenngleich technisch nicht vollständig korrekt - unter dem Begriff eines Virtual Private Network oder VPN eingeordnet.

Gemäß einer Fortbildung der Erfindung ist vorgesehen, dass das Authentisierungsgerät das erfindungsgemäße Verfahren initiiert, beispielsweise durch Einstecken des Authentisierungsgeräts an einer Buchse des Automatisierungsgeräts oder durch Einstecken eines zum Authentisierungsgerät führenden Verbindungskabels an der Buchse des Automatisierungsgeräts. Alternativ wird das erfindungsgemäße Verfahren durch eine Betätigung eines am Authentisierungsgerät angezeigten oder vorgesehenen Eingabefelds initiiert

Gemäß einer Fortbildung der Erfindung ist vorgesehen, dass das Authentisierungsgerät zumindest teilweise als mobiles Kommunikationsendgerät ausgebildet ist. Diese Ausgestaltung hat den Vorteil eines Einsatzes handelsüblicher Hardware, welche mit geeigneter Software zum Einbinden des Automatisierungsgeräts unter Verwendung des mobiles Kommunikationsendgeräts als Authentisierungsgerät auf den jeweiligen Einsatzzweck anpassbar ist.

Gemäß einer Fortbildung der Erfindung ist vorgesehen, dass das Authentisierungsgerät zumindest teilweise als Netzwerkgerät, insbesondere als Router oder als Netzwerkswitch ausgebildet ist. Diese Ausgestaltung hat den Vorteil, dass ein Router oder Netzwerkswitch einen Kommunikationskanal in oder über einen vorbehalten IP-Adressraum (beispielsweise im Fall eines Routers) oder einen vorbehaltenen Kommunikationskanal, etwa unter (beispielsweise im Fall eines Netzwerkswitches) Anwendung eines VLAN Protokolls (Virtual Local Area Network) bereitstellen kann. Der vorbehaltene Kommunikationskanal kann sowohl zur Übertragung des Zugriffsberechtigungsnachweises als auch zur Übertragung des Identitätsnachweises zwischen dem als Netzwerkgerät ausgebildeten Authentisierungsgerät und dem Automatisierungsserver dienen.

Gemäß einer Fortbildung der Erfindung ist vorgesehen, dass das Authentisierungsgerät mehrere miteinander kommunikativ gekoppelte Komponenten umfasst. Diese Ausgestaltung kann einerseits vorgesehen sein, eine redundante Ausfallsicherheit anzustreben. Andererseits können mehrere miteinander kommunikativ gekoppelte Komponenten auch eine fortgesetzte Mehrfaktorauthentifizierung bewirken. In einem möglichen Ausführungsbeispiel könnte vorgesehen sein, dass einem Servicetechniker eine erste Komponente eines Authentisierungsgeräts anvertraut wird und dass ein zur netzwerktechnischen Administration des Automatisierungssystems Beauftragter eine zweite Komponente eines Authentisierungsgeräts verwahrt. Nach der Ausbildung der Schnittstelle zwischen dem Automatisierungsgerät und der ersten Komponente des Authentisierungsgeräts wird eine Generierung des dem Automatisierungsgerät zugeordneten Zugriffsberechtigungsnachweises so lange verschoben, bis der zur netzwerktechnischen Administration des Automatisierungssystems Beauftragte Kenntnis über die Ausbildung der Schnittstelle zwischen dem Automatisierungsgerät und der ersten Komponente des Authentisierungsgerät erlangt hat und über seine zweite Komponente des Authentisierungsgeräts eine Freigabe erteilt hat. Eine Kenntniserlangung kann so eingerichtet sein, dass der Servicetechniker nach der Ausbildung der Schnittstelle zwischen dem Automatisierungsgerät und der ersten Komponente des Authentisierungsgeräts zunächst eine Anfrage an die zweite Komponente des Authentisierungsgeräts senden muss.

Im Folgenden werden weitere Ausführungsbeispiele und Vorteile der Erfindung anhand der Zeichnung näher erläutert. Dabei zeigen:
- Fig. 1:: eine schematische Funktionaldarstellung von Kommunikationsziehungen zum Einbinden eines Automatisierungsgeräts in ein Automatisierungssystem gemäß einer ersten Ausführungsform; und;
- Fig. 2:: eine schematische Funktionaldarstellung von Kommunikationsziehungen zum Einbinden eines Automatisierungsgeräts in ein Automatisierungssystem gemäß einer zweiten Ausführungsform.

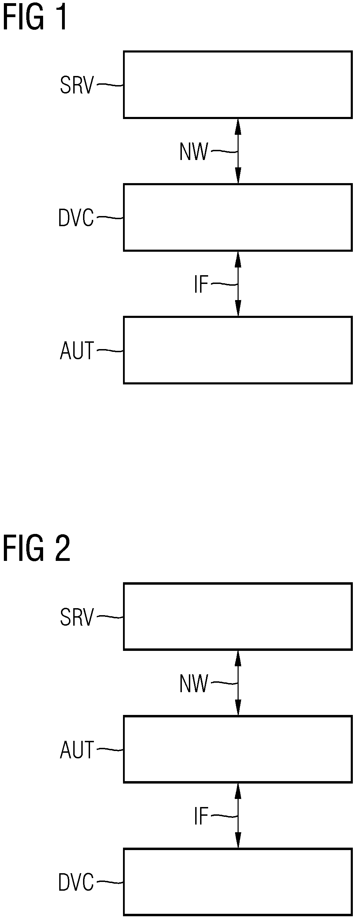

Fig. 1 zeigt einen Ausschnitt aus einem Automatisierungssystem, dessen administratives Portal in vereinfachter Weise durch einen Automatisierungsserver SRV dargestellt ist. In realen Implementierungen kann das Automatisierungssystem, je nach Komplexität und Größe, neben dem Automatisierungsserver SRV weiter Server und Steuerungskomponenten umfassen. Für dies Beschreibung dient der dargestellte Automatisierungsserver SRV lediglich als exemplarisch für einen oder mehrere Komponenten, welche für ein Onboarding von Automatisierungsgeräten zum Einsatz kommen.

Gemäß der in Fig. 1 gezeigten Darstellung erfolgt ein Einbinden eines Automatisierungsgeräts DVC in ein Automatisierungssystem derart, dass zwischen dem Automatisierungsgerät DVC und dem Authentisierungsgerät AUT eine Schnittstelle IF ausgebildet wird, wobei das Automatisierungsgerät DVC über einen zusätzlichen Kommunikationskanal NW mit dem Automatisierungsserver SRV verfügt. Dieser Kommunikationskanal NW wird üblicherweise als möglicherweise vorübergehende, paketorientierte Kommunikationsbeziehung bzw. »Session« über ein paketorientiertes Netzwerk gestaltet.

Das oben zum Kommunikationskanal NW gesagte kann grundsätzlich auch für die Schnittstelle IF zutreffen. Um aber die Verbindung der Schnittstelle IF nicht der beliebigen Natur und Gefahr einer schlecht rückverfolgbaren Netzwerkverbindung auszusetzen, welche keine unmittelbare Inspektion des verbundenen Authentisierungsgeräts AUT gestattet, kann vorgesehen sein, die Schnittstelle IF durch eine unmittelbare optische oder galvanische Direktverbindung zu bilden.

Nach Ausbildung der Schnittstelle IF dem zu verbindenden Automatisierungsgerät DVC und dem Authentisierungsgerät AUT werden vom Authentisierungsgerät AUT Daten zur Zuordnung des zu verbindenden Automatisierungsgerät DVC zu Verfügung gestellt.

Daraufhin wird z.B. zwischen dem zu verbindenden Automatisierungsgerät DVC und dem Authentisierungsgerät AUT ein Authentisierungsverfahren durchgeführt.

Der Automatisierungsserver SRV oder ein alternatives übergeordnetes System erhält einen Zugriffsberechtigungsnachweises, welcher in seiner einfachsten Gestaltung eine Aussage enthält, dass ein bestimmtes Automatisierungsgerät DVC mit dem Authentisierungsgerät AUT verbunden wurde. Der Automatisierungsgerät DVC kann dem Automatisierungsgerät DVC nun in Folge darauf Eigenschaften zuweisen, beispielsweise Zugangsrechte einrichten.

In einer Ausführungsform könnte das Automatisierungsgerät DVC eine Steuerung sein und das Authentisierungsgerät AUT ein USB-Stick. Der als Authentisierungsgerät AUT ausgestaltete USB-Stick enthält unter anderem ein beispielsweise ein Trusted Platform Module oder TPM inkl. eines privaten Schlüssels. Der als Authentisierungsgerät AUT ausgestaltete USB-Stick ermöglicht somit die Durchführung eines Challenge-Response-Verfahren zur Generierung eines dem Automatisierungsgerät zugeordneten Zugriffsberechtigungsnachweises. Das zugehörige Challenge-Response-Verfahren kann im Wesentlichen auf dem zu verbindenden Automatisierungsgerät DVC und nur zu einem kleineren Teil auf dem als Authentisierungsgerät AUT ausgestaltete USB-Stick durchgeführt werden.

Gemäß der in Fig. 2 gezeigten Darstellung erfolgt ein Einbinden eines Automatisierungsgeräts DVC in ein Automatisierungssystem derart, dass zwischen dem Automatisierungsgerät DVC und dem Authentisierungsgerät AUT eine Schnittstelle IF ausgebildet wird, wobei das Authentisierungsgerät AUT über einen zusätzlichen Kommunikationskanal NW mit dem Automatisierungsserver SRV verfügt. Auch dieser Kommunikationskanal NW kann als möglicherweise vorübergehende, paketorientierte Kommunikationsbeziehung bzw. »Session« über ein paketorientiertes Netzwerk gestaltet sein.

In einer möglichen Ausführungsform könnte das Authentisierungsgerät AUT ein USB-Mobilfunkadapter sein, welcher eine Mobilfunkverbindung unter Vorlage einer Teilnehmeridentität auszubilden vermag, wobei die Teilnehmeridentität in einer SIM-Karte verkörpert oder als digitale eSIM im USB-Mobilfunkadapter gespeichert ist. Der als Authentisierungsgerät AUT ein USB-Mobilfunkadapter ermöglicht in dieser Ausführungsform einen Zugang zu oberhalb der Mobilfunkverbindung ausgebildeten zusätzlich gesicherten Kommunikationskanal in einem VPN-Netz, über welches dann der Austausch des Zugriffsberechtigungsnachweises und/oder des Identitätsnachweises mit dem Automatisierungsserver SRV stattfindet.

In einer weiteren möglichen Ausführungsform könnte das Authentisierungsgerät AUT ein Programmiergerät sein, welches eine Anmeldung angeschlossener Geräte nach deren Identifizierung durchführt. In einer weiteren möglichen Ausführungsformen könnte das Authentisierungsgerät AUT als ein Netzwerkgerät, z.B. Router oder als ein mobiles Endgerät, z.B. Smartphone ausgestaltet sein. In einer weiteren möglichen Ausführungsform könnte das Authentisierungsgerät AUT seinerseits eine Authentisierung eines Nutzers oder Bedieners erfordern, beispielsweise bei Inbetriebnahme oder bei Ausbildung der Schnittstelle IF mit dem Automatisierungsgerät DVC. In einer weiteren möglichen Ausführungsform werden dem Automatisierungsgerät DVC nach dessen Einbinden bzw. »Onboarding« in das Automatisierungssystem zusätzlich zu vorhandenen Zugangsdaten neue Zugangsdaten bereitgestellt.

In realen Implementierungen kann das Automatisierungssystem, je nach Komplexität und Größe, neben dem Automatisierungsserver SRV weiter Server und Steuerungskomponenten umfassen. Neben einem - nicht dargestellten - Authentisierungsserver zur eigentlichen Authentifizierung des Zugriffsberechtigungsnachweises bzw. des Identitätsnachweises kann ein - nicht dargestellter - Policy Enforcement Server vorgesehen sein. Dieser Policy Enforcement Server dient beispielsweise dazu, aktuelle gerätespezifische Betreiberdaten zu binden, sobald dem Policy Enforcement Server eine erfolgreiche Authentisierung des Automatisierungsgerätes gegenüber dem Authentisierungsserver gemeldet wird. Auch eine Bindung der aktuellen gerätespezifischen Betreiberdaten an den authentisierten Identitätsnachweis des Automatisierungsgerätes kann bei einer möglichen Ausführungsform durch den Policy Enforcement Server erfolgen. Ein - nicht dargestellter - Konfigurationsserver kann dazu dienen, aktuelle gerätespezifische Betreiberdaten an den Policy Enforcement Server zu übergeben.

Ein wesentlicher Unterschied der hier vorgeschlagenen Ausführungsformen zu bekannten Lösungen mit einer PKI-basierten (Public-Key-Infrastruktur) Anmeldung an Diensten mittels eines Verwahrungsmodul ist, dass diese aus dem Stand der Technik bekannten Lösungen eine Verknüpfung einer Identität mit einem Berechtigungsnachweis - wie etwa einem kryptografischen Schlüssel - vorsehen. Im Gegensatz dazu wird gemäß der erfindungsgemäßen Lösung zunächst keine Identität, sondern eine Berechtigung mit dem Berechtigungsnachweis verbunden.

Zwar gibt es im Stand der Technik auch Lösungen, bei denen es vorgesehen ist, dass das Zugangsmedium, welches das Verwahrungsmodul und den Schlüssel enthält, weitergegeben wird. Dennoch binden auch solche Lösungen den Schlüssel an eine Identität, nämlich die des Zugangsmediums. Diese Logik ist insbesondere auch daran zu sehen, dass in der Regel die Zuordnung der Berechtigungen zu dem Zugangsmedium dynamisch ist und der Besitz des Zugangsmediums alleine ausreicht, um Zugang gewährt zu bekommen.

Erfindungsgemäß erlaubt eine dem oben genannten Zugangsmedium vergleichbarere Maßnahme jedoch für sich allein genommen noch keinen Zugang. Ein erfindungsgemäßes Authentisierungsgerät erlaubt vielmehr eine Berechtigung zum Zugriff, welche erst in einem folgenden Schritt eine Verknüpfung einer Identität mit einer Berechtigung nach sich zieht.

Darüber hinaus wird auch weiterhin zwischen individuellen Automatisierungsgeräten DVC unterschieden. Eine spätere Entscheidung über Berechtigungen erfolgt also primär anhand des Identitätsnachweises und nicht anhand eines ehemals verbundenen Authentisierungsgeräts AUT.

Besonders deutlich wird dieses, wenn eine Vielzahl von Geräten über ein Authentisierungsgerät die Berechtigung erhält, Daten auf einem bestimmten Speicher abzulegen und eigene Daten zu lesen. Der Lesezugriff hängt zwar wie auch der Schreibzugriff auch davon ab, eine Nutzungsberechtigung erhalten zu haben, primär aber davon, ob die entsprechenden Daten von dem Gerät selbst geschrieben wurden.

Die Erfindung ermöglicht also eine einfache Konfiguration einer Automatisierungssystems bei hoher Sicherheit, nämlich einen Schutz gegen Angriffe von Dritten aufgrund von Nachlässigkeiten bei der Konfiguration.

Das Verfahren ist insbesondere vorteilhaft für Hersteller von Automatisierungsgeräten DVC, welche als Universalgeräte vertrieben werden und erst später, kundenseitig in ein Automatisierungssystem eingebunden werden sollen.

## Patentansprüche

1. Verfahren zum Einbinden eines Automatisierungsgeräts in ein Automatisierungssystem unter Verwendung eines mit dem Automatisierungsgerät verbindbaren Authentisierungsgeräts, umfassend die Schritte:
- Ausbildung einer Schnittstelle (IF) zwischen dem Automatisierungsgerät (DVC) und dem Authentisierungsgerät (AUT) und Generierung eines dem Automatisierungsgerät (DVC) zugeordneten Zugriffsberechtigungsnachweises (ACC);
- Empfang und Authentisierung des Zugriffsberechtigungsnachweises (ACC) an einem Automatisierungsserver (SRV) des Automatisierungssystems und Zuweisung einer Zugriffsberechtigung an das Automatisierungsgerät (DVC);
- Empfang und Authentisierung eines Identitätsnachweises (IDC) des zugriffsberechtigten Automatisierungsgeräts (DVC) am Automatisierungsserver (SRV) und Einbinden des bezüglich seiner Identität authentisierten Automatisierungsgeräts (DVC) in das Automatisierungssystem.

2. Verfahren nach Patentanspruch 1, **dadurch gekennzeichnet, dass** die Schnittstelle (IF) durch eine unmittelbare optische oder galvanische Direktverbindung gebildet wird.

3. Verfahren nach einem der vorgenannten Patentansprüche, **dadurch gekennzeichnet, dass** der Zugriffsberechtigungsnachweises (ACC) vom Automatisierungsgerät (DVC) an den Automatisierungsserver (SRV) gesendet wird.

4. Verfahren nach einem der vorgenannten Patentansprüche, **dadurch gekennzeichnet, dass** der Zugriffsberechtigungsnachweises (ACC) vom Authentisierungsgerät (AUT) an den Automatisierungsserver (SRV) gesendet wird.

5. Verfahren nach einem der vorgenannten Patentansprüche, **dadurch gekennzeichnet, dass** die Generierung des Zugriffsberechtigungsnachweises (ACC) in Zusammenwirkung des Automatisierungsgeräts (DVC) und des Authentisierungsgerät (AUT) erfolgt.

6. Verfahren nach einem der vorgenannten Patentansprüche, **dadurch gekennzeichnet, dass** die Generierung des Zugriffsberechtigungsnachweises (ACC) unter Durchführung eines Challenge-Response-Verfahrens erfolgt.

7. Verfahren nach einem der vorgenannten Patentansprüche, **dadurch gekennzeichnet, dass** der Empfang des Identitätsnachweises (IDC) durch einen zwischen dem Authentisierungsgerät (AUT) und dem Automatisierungsserver (SRV) ausgebildeten Kommunikationskanal erfolgt.

8. Verfahren nach einem der vorgenannten Patentansprüche, **dadurch gekennzeichnet, dass** das Authentisierungsgerät (AUT) dieses Verfahren initiiert.

9. Automatisierungssystem zum Einbinden eines Automatisierungsgeräts in ein Automatisierungssystem unter Verwendung eines mit dem Automatisierungsgerät verbindbaren Authentisierungsgeräts, das Automatisierungssystem umfassend:
- eine Schnittstelle (IF) zwischen dem Automatisierungsgerät (DVC) und dem Authentisierungsgerät (AUT) zur Generierung eines dem Automatisierungsgerät (DVC) zugeordneten Zugriffsberechtigungsnachweises (ACC);
- ein Automatisierungsserver (SRV) eingerichtet zum Empfang und zur Authentisierung des Zugriffsberechtigungsnachweises (ACC) sowie zur Zuweisung einer Zugriffsberechtigung an das Automatisierungsgerät (DVC);
- der Automatisierungsserver (SRV) ferner eingerichtet zum Empfang und zur Authentisierung eines Identitätsnachweises (IDC) des zugriffsberechtigten Automatisierungsgeräts (DVC) und zur Einbindung des bezüglich seiner Identität authentisierten Automatisierungsgeräts (DVC) in das Automatisierungssystem.

10. Authentisierungsgerät zum Einbinden eines Automatisierungsgeräts in ein Automatisierungssystem gemäß Patentanspruch 9, **dadurch gekennzeichnet, dass** das Authentisierungsgerät zumindest teilweise als mobiles Kommunikationsendgerät ausgebildet ist.

11. Authentisierungsgerät zum Einbinden eines Automatisierungsgeräts in ein Automatisierungssystem gemäß Patentanspruch 9, **dadurch gekennzeichnet, dass** das Authentisierungsgerät zumindest teilweise als Netzwerkgerät, insbesondere als Router oder als Netzwerkswitch ausgebildet ist.

12. Authentisierungsgerät zum Einbinden eines Automatisierungsgeräts in ein Automatisierungssystem gemäß einem der vorgenannten Patentansprüche 9 bis 11, **dadurch gekennzeichnet, dass** das Authentisierungsgerät mehrere miteinander kommunikativ gekoppelte Komponenten umfasst.
